# EUROPEAN PATENT SPECIFICATION

(11) **EP 3 540 866 B1**
(45) Date of publication and mention of the grant of the patent: **10.03.2021**
(21) Application number: 17868519.4
(22) Date of filing: 26.10.2017
(51) Int. Cl.: H01R 13/405, H01R 43/24, H02K 3/28, H01R 25/16

(54) **CONNECTOR**
VERBINDER
CONNECTEUR

(30) Priority: 09.11.2016 JP 2016218642
(43) Date of publication of application: 18.09.2019
(73) Proprietor: Sumitomo Wiring Systems, Ltd., Yokkaichi-shi, Mie 510-8503 (JP)
(72) Inventor: ITOU Yuuji, Yokkaichi-shi Mie 510-8503 (JP)
(74) Representative: Müller-Boré & Partner Patentanwälte PartG mbB
(86) International application number: PCT/JP2017/038648
(87) International publication number: WO 2018/088221

(56) References cited:
- EP-A2- 2 139 098
- JP-A- 2000 252 038
- JP-A- 2005 174 697
- JP-A- 2012 143 019
- JP-A- 2015 185 420
- US-A1- 2015 295 371

## Description

### Technical Field

A technique disclosed by this specification relates to a connector.

### Background Art

Conventionally, a connector in which a plurality of terminal fittings are held in a housing is known, for example, from JP 2005 - 174 697 A (pant literature 1 below). This connector is molded by, after holding the plurality of terminal fittings through terminal insertion holes of a core, fitting ends of the terminal fittings on one side into terminal holding groves of a fixed mold and fitting the other ends of the terminal fittings into terminal holding holes of an upper mold to position the terminal fittings and, in this state, injecting molten resin into a cavity through a gate. After the molten resin is cooled and cured, the upper mold is opened to take out the connector from the fixed mold.

### Citation List

### Patent Literature

Patent literature 1: JP 2005 - 174 697 A
JP 2012 - 143 019 A discloses a connector according to the preamble of claim 1.

### Summary of the Invention

### Technical Problem

However, since the core is not directly held on a fixed side or in the upper mold during molding in the above connector, the core may deviate or the terminal fittings may be deformed by receiving an injection pressure of the molten resin. Further, since the terminal fittings are directly held by the fixed mold and the upper mold, metal foreign matters may be produced such as due to the peeling of plating formed on surfaces of the terminal fittings, whereby a molding failure may occur.

### Solution to Problem

A connector disclosed by this specification includes a primary mold body formed by integrally molding a primary conductor to a primary molding resin, and a secondary mold body formed by integrally molding a secondary conductor to a secondary molding resin, the secondary conductor including a main circuit portion extending along the primary mold body and a branched circuit portion branched from the main circuit portion and laterally projecting, the primary molding resin including a supporting portion laterally projecting from a side surface of the secondary molding resin along the branched circuit portion, and the supporting portion having a circuit contact surface disposed below a base end part of the branched circuit portion and to be brought into contact with a lower surface of the branched circuit portion and a pair of mold contact surfaces disposed on both left and right sides of the base end part of the branched circuit portion and disposed flush with an upper surface of the branched circuit portion.

According to this configuration, in performing secondary molding of the primary mold body, the base end part of the branched circuit portion of the secondary conductor is set in the supporting portion of the primary mold body and the base end part of the branched circuit portion and the supporting portion are vertically sandwiched and fixed by upper and lower molds. Thus, the primary mold body and the secondary conductor can be directly fixed by the molds and a positional deviation of the primary mold body can be prevented.

Further, in setting the secondary conductor in the primary mold body, the base end part of the branched circuit portion may be inserted toward the circuit contact surface of the supporting portion from above. Thus, the secondary conductor needs not be directly supported by the molds and the production of metal foreign matters can be prevented. Furthermore, since resin is cut off by the contact of the mold with the upper surface of the branched circuit portion and the pair of mold contact surfaces, the production of metal foreign matters due to the rubbing of the secondary conductor by the mold can be prevented.

The technique disclosed by this specification may be configured as follows.

The branched circuit portion may be composed of a wide portion connected to the main circuit portion and to be brought into contact with the circuit contact surface and a plurality of narrow portions laterally projecting from the wide portion.

According to this configuration, since the branched circuit portion is sandwiched at the position of the wide portion by the upper and lower molds, stress acting on the secondary conductor can be distributed.

The primary conductor and the secondary conductor may be busbars having a rectangular cross-sectional shape and disposed side by side in a direction intersecting both an extending direction of the main circuit portion and a projecting direction of the branched circuit portion.

According to this configuration, the connector can be reduced in size as compared to the case where the primary conductor and the secondary conductor are arranged side by side in the projecting direction of the branched circuit portion.

### Effects of the Invention

According to the technique disclosed by this specification, it is possible to prevent a positional deviation of the primary mold body and prevent the production of metal foreign matters.

### Brief Description of the Drawings

FIG. 1 is a plan view of a connector,
FIG. 2 is a section along A-A in FIG. 1,
FIG. 3 is a front view of the connector,
FIG. 4 is a back view of the connector,
FIG. 5 is a side view of the connector,
FIG. 6 is a plan view of a primary mold body,
FIG. 7 is a section along C-C in FIG. 7,
FIG. 8 is a plan view showing a state where a secondary conductor is set in the primary mold body,
FIG. 9 is a section along D-D in FIG. 9,
FIG. 10 is a front view in section of a supporting portion,
FIG. 11 is a section showing a state where a branched circuit portion is set in the supporting portion,
FIG. 12 is a section showing a state where a mold is in contact with the upper surface of the branched circuit portion and a pair of mold contact surfaces,
FIG. 13 is a section showing a state where the mold is opened after molten resin is cooled and cured, and
FIG. 14 is a side view in section showing a state where the mold is in contact with the upper surface of the branched circuit portion.

### Embodiments of the Invention

### <Embodiment>

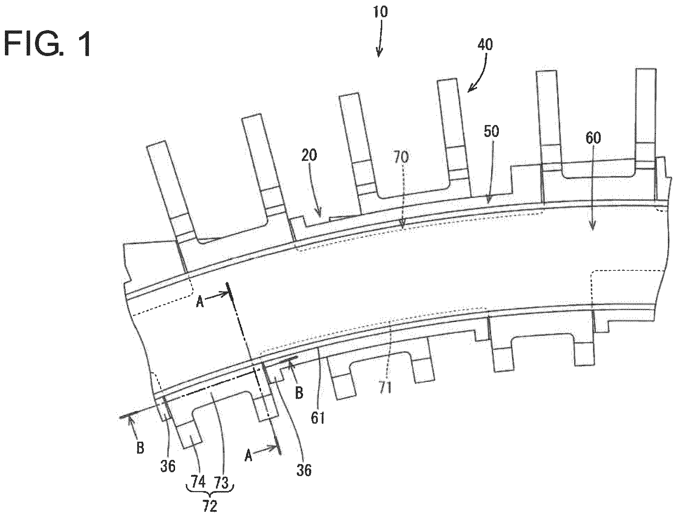

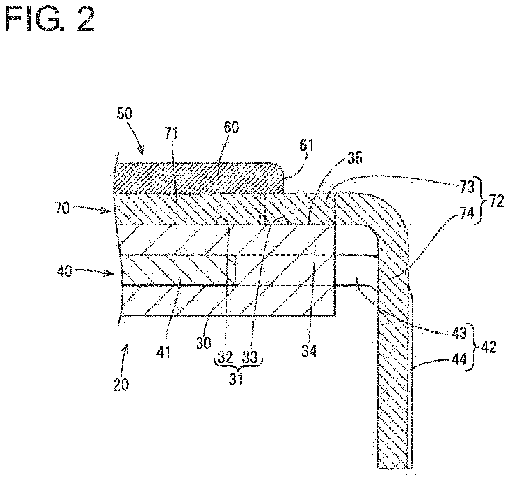

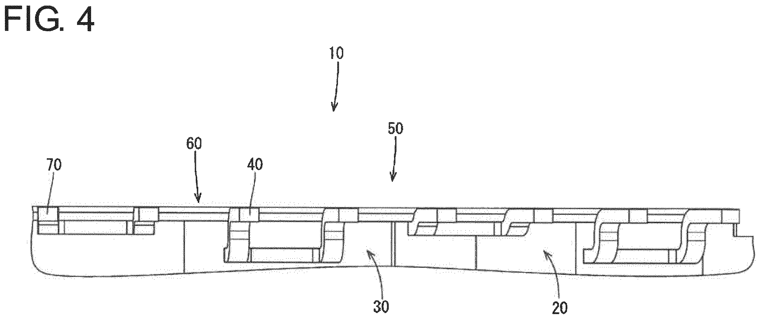

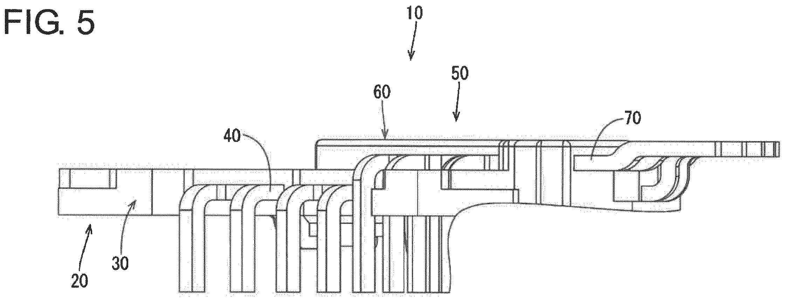

An embodiment is described with reference to FIGS. 1 to 14. A connector 10 of this embodiment is, as shown in FIGS. 1 and 2, a terminal module to be connected to a device such as a motor and includes a primary mold body 20 and a secondary mold body 50. The primary mold body 20 is formed by integrally molding a primary conductor 40 to a primary molding resin 30 by primary molding, and the secondary mold body 50 is formed by integrally molding a secondary conductor 70 to a secondary molding resin 60 by secondary molding. Specifically, the connector 10 composed of the primary mold body 20 and the secondary mold body 50 is formed by performing secondary molding with the primary mold body 20 set as a core in molds 80, 81.

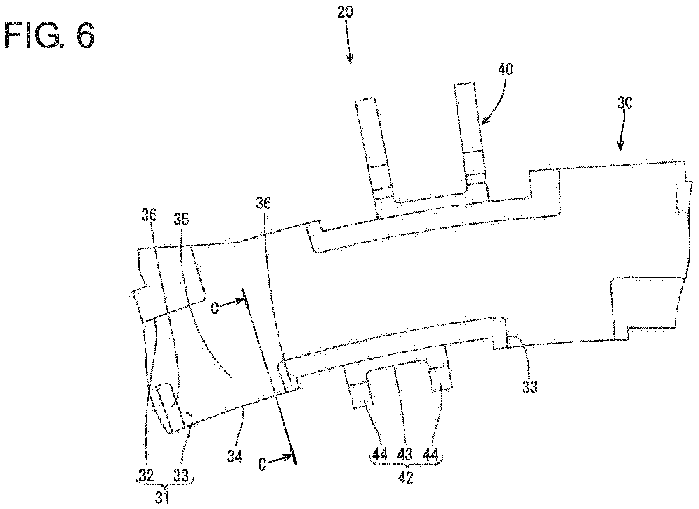

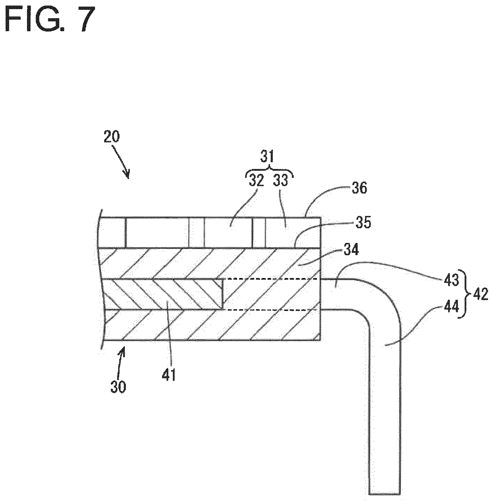

As shown in FIG. 6, the primary mold body 20 includes the primary molding resin 30 arcuately extending along the outer surface of the device, and parts of the primary conductor 40 laterally project from the primary molding resin 30. The primary conductor 40 is a busbar having a rectangular cross-sectional shape and includes, as shown in FIG. 7, a main circuit portion 41 arcuately extending along the primary molding resin 30 and a plurality of branched circuit portions 42 laterally projecting from the main circuit portion 41. The branched circuit portion 42 is composed of a wide portion 43 connected to the main circuit portion 41 and a pair of narrow portions 44 extending in a specific direction (downward in FIG. 7) from the wide portion 43.

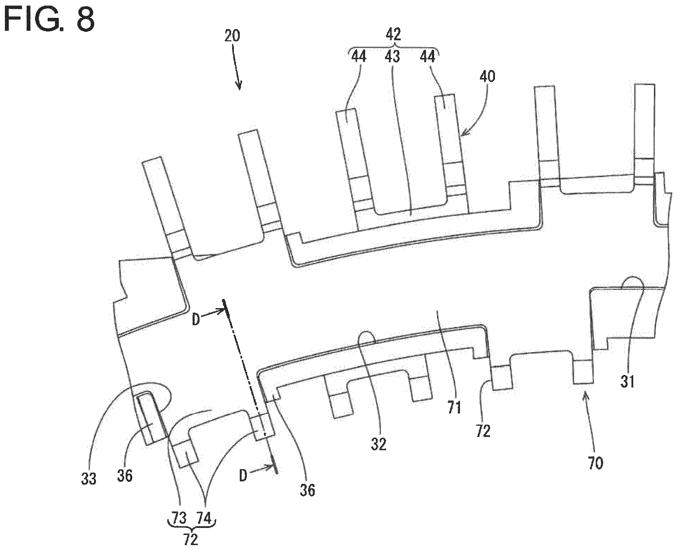

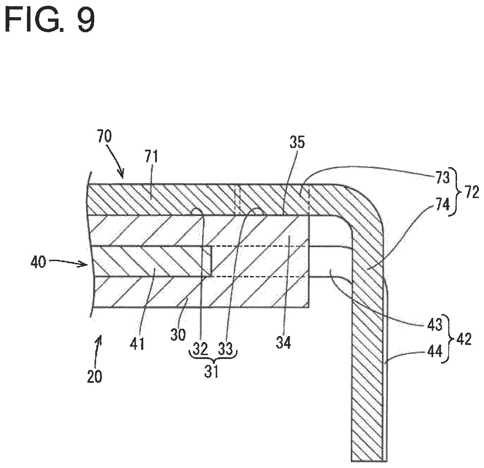

An accommodation groove 31 for accommodating the secondary conductor 70 is provided in the upper surface of the primary molding resin 30. As shown in FIG. 8, the secondary conductor 70 is a busbar configured similarly to the primary molding resin 30 and having a rectangular cross-sectional shape, and includes a main circuit portion 71 extending along the primary mold body 20 and a plurality of branched circuit portions 72 laterally projecting from the main circuit portion 71. Similarly, the branched circuit portion 72 is composed of a wide portion 73 connected to the main circuit portion 71 and a pair of narrow portions 74 extending in a specific direction (downward in FIG. 9) from the wide portion 73.

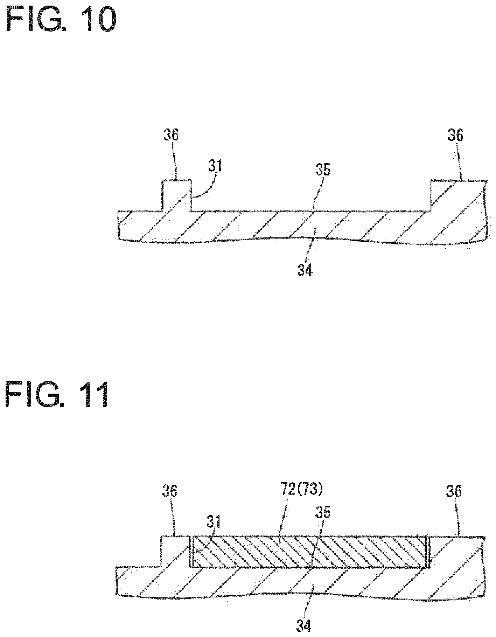

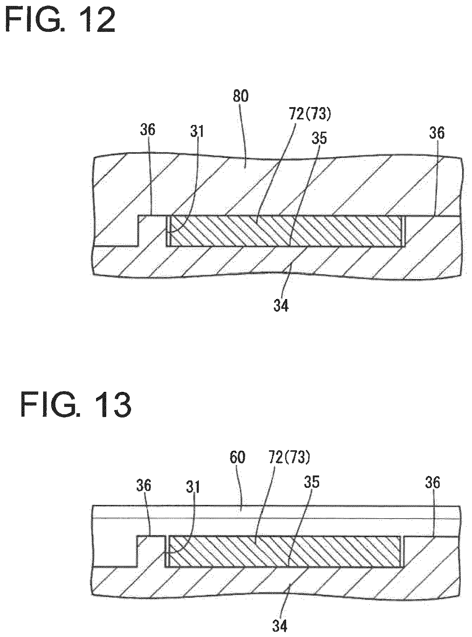

As shown in FIG. 6, the accommodation groove 31 is composed of a main accommodation groove 32 for accommodating the main circuit portion 71 of the secondary conductor 70 and a plurality of auxiliary accommodation grooves 33 for respectively accommodating base end parts (wide portions 73) of the plurality of branched circuit portions 72. The auxiliary accommodation groove 33 is formed by a supporting portion 34 supporting the wide portion 73 of the branched circuit portion 72 from below. The supporting portion 34 laterally projects along the wide portion 73 of the branched circuit portion 72 as shown in FIG. 1, and has a substantially gate shape open upward as shown in FIG. 10. Further, the supporting portion 34 has a circuit contact surface 35 to be brought into contact with the lower surface of the wide portion 73 and a pair of mold contact surfaces 36 to be brought into contact with the mold 80 as shown in FIGS. 11 and 12.

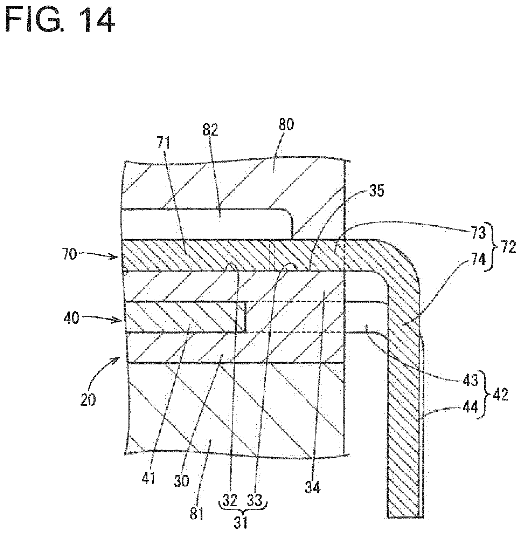

A height from the circuit contact surface 35 to the mold contact surfaces 36 is equal to a thickness of the wide portion 73. Thus, with the wide portion 73 held in contact with the circuit contact surface 35, the pair of mold contact surfaces 36 and the upper surface of the wide portion 73 are disposed flush with each other. When the mold 80 is closed, the pair of mold contact surfaces 36 and the upper surface of the wide portion 73 substantially simultaneously contact the mold 80 and the wide portion 73 is not rubbed by the mold 80. Thus, the production of metal foreign matters (e.g. plating waste powdered by scraping plating formed on the surface of the wide portion 73) can be prevented. Further, since the primary mold body 20 serving as the core is directly sandwiched and fixed by a pair of upper and lower molds 80, 81 as shown in FIG. 14, positional deviations of both the primary mold body 20 and the secondary conductor 70 can be prevented without being affected by an injection pressure of the molten resin injected from a gate.

As shown in FIG. 1, the secondary molding resin 60 is provided along the main circuit portion 71 of the secondary conductor 70 and disposed to close the main accommodation groove 32 accommodating the main circuit portion 71. Thus, the auxiliary accommodation groove 33 accommodating the wide portion 73 of the branched circuit portion 72 is exposed to outside without being closed by the secondary molding resin 60. As a result, as shown in FIG. 2, the supporting portion 34 supporting the wide portion 73 laterally projects from a side surface 61 of the secondary conductor 70.

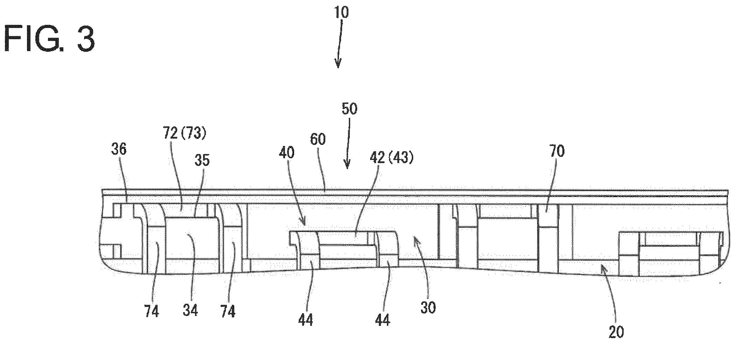

Further, the main circuit portion 71 of the secondary conductor 70 is disposed above and side by side with the main circuit portion 41 of the primary conductor 40. In other words, the main circuit portion 71 of the secondary conductor 70 and the main circuit portion 41 of the primary conductor 40 are disposed side by side in a direction intersecting both an extending direction of the main circuit portion 71 and a projecting direction of the branched circuit portions 72. As shown in FIGS. 3 to 5, the wide portion 73 of the branched circuit portion 72 of the secondary conductor 70 is disposed above the wide portion 43 of the branched circuit portion 42 of the primary conductor 40, but the lower ends of the narrow portions 74 of the secondary conductor 70 and those of the narrow portions 44 of the primary conductor 40 are disposed side by side at the same height.

This embodiment is configured as described above. Next, functions of this embodiment are described. First, the primary mold body 20 is formed by integrally forming the primary conductor 40 to the primary molding resin 30 in primary molding. Subsequently, as shown in FIG. 9, the secondary conductor 70 is set in the accommodation groove 31 of the primary molding resin 30. The secondary conductor 70 is positioned at a proper mount position by the accommodation groove 31. If the dimensional accuracy of the secondary conductor 70 is low, the secondary conductor 70 cannot be accommodated in the accommodation groove 31. This can prevent the use of the secondary conductor 70 having low dimensional accuracy. Such a case can be dealt with by minutely correcting a mold for primary molding. By doing so, it is not necessary to correct a metal press die for forming the secondary conductor 70 and the above case can be easily dealt with.

Subsequently, the primary mold body 20 having the secondary conductor 70 mounted therein is set in the molds 80, 81 for secondary molding. When the molds 80, 81 are closed, the secondary conductor 70 and the primary mold body 20 are sandwiched by the pair of upper and lower molds 80, 81 as shown in FIG. 14. Thus, positional deviations of both the secondary conductor 70 and the primary mold body 20 due to the injection pressure can be avoided. When the bolts 80, 81 are opened after molten resin is filled into a cavity 82 formed between the both molds 80, 81 and cooled and cured, the secondary molding resin 60 is integrally formed on the upper surface of the secondary conductor 70 and the connector 10 is obtained as shown in FIG. 2.

As described above, in this embodiment, the base end parts of the branched circuit portions 72 of the secondary conductor 70 are set in the supporting portions 34 of the primary mold body 20 and the base end parts of the branched circuit portions 72 and the supporting portions 34 are vertically sandwiched and fixed by the upper and lower molds 80, 81 in performing secondary molding of the primary mold body 20. Thus, the primary mold body 20 and the secondary conductor 70 can be directly fixed by the molds 80, 81 and a positional deviation of the primary mold body 20 can be prevented.

Further, in setting the secondary conductor 70 in the primary mold body 20, the base end parts of the branched circuit portions 72 may be inserted toward the circuit contact surfaces 35 from above. Thus, the secondary conductor 70 needs not be directly supported by the molds 80, 81 and the production of metal foreign matters can be prevented. Furthermore, since the resin is cut off by the contact of the molds 80, 81 with the upper surface of the branched circuit portions 72 and the pairs of mold contact surfaces 36, the production of metal foreign matters due to the rubbing of the secondary conductor 70 by the molds 80, 81 can be prevented.

The branched circuit portion 72 may be composed of the wide portion 73 connected to the main circuit portion 71 and to be brought into contact with the circuit contact surface 35 and a plurality of the narrow portions 74 projecting from the wide portion 73.

According to this configuration, the branched circuit portion 72 is sandwiched at the position of the wide portion 73 by the upper and lower molds 80, 81, stress acting on the secondary conductor 70 can be distributed.

The primary conductor 40 and the secondary conductor 70 may be busbars having a rectangular cross-sectional shape and may be disposed side by side in the direction intersecting both the extending direction of the main circuit portion 71 and the projecting direction of the branched circuit portions 72.

According to this configuration, the connector 10 can be reduced in size as compared to the case where the primary conductor 40 and the secondary conductor 70 are arranged side by side in the projecting direction of the branched circuit portions 72.

### Examples

The technique disclosed by this specification is not limited to the above described and illustrated embodiment. For example, the following various modes are also included.
(1) Although the supporting portion 34 is formed into a substantially gate shape open upward and the circuit contact surface 35 is a flat surface in the above embodiment, a circuit contact surface may be a non-flat surface or a part of a circuit contact surface may be a flat surface.
(2) Although the branched circuit portion 72 is composed of the wide portion 73 and the pair of narrow portions 74 in the above embodiment, a branched circuit portion including no narrow portion may be used.
(3) Although both the primary conductor 40 and the secondary conductor 70 are busbars in the above embodiment, coated wires may be used instead of busbars.

### List of Reference Signs

- 10: connector
- 20: primary mold body
- 30: primary molding resin
- 34: supporting portion
- 35: circuit contact surface
- 36: mold contact surface
- 40: primary conductor
- 50: secondary mold body
- 60: secondary molding resin
- 61: side surface
- 70: secondary conductor
- 71: main circuit portion
- 72: branched circuit portion
- 73: wide portion
- 74: narrow portion
- 80,81: mold

## Claims

1. A connector (10), comprising:
a primary mold body (20) formed by integrally molding a primary conductor (40) to a primary molding resin (30); and
a secondary mold body (50) formed by integrally molding a secondary conductor (70) to a secondary molding resin (60);
the secondary conductor (70) including a main circuit portion (71) extending along the primary mold body (20) and a branched circuit portion (72) branched from the main circuit portion (71) and laterally projecting;
the primary molding resin (30) including a supporting portion (34) laterally projecting from a side surface (61) of the secondary molding resin (60) along the branched circuit portion (72); and
the supporting portion (34) having a circuit contact surface (35) disposed below a base end part of the branched circuit portion (72) and to be brought into contact with a lower surface of the branched circuit portion (72),
**characterized by**
a pair of mold contact surfaces (36) disposed on both left and right sides of the base end part of the branched circuit portion (72) and disposed flush with an upper surface of the branched circuit portion (72).

2. A connector (10) according to claim 1, wherein the branched circuit portion (72) is composed of a wide portion (73) connected to the main circuit portion (71) and to be brought into contact with the circuit contact surface (35) and a plurality of narrow portions (74) laterally projecting from the wide portion (73) and disposed more laterally than the supporting portion (34).

3. A connector (10) according to claim 1 or 2, wherein the primary conductor (40) and the secondary conductor (70) are busbars having a rectangular cross-sectional shape and disposed side by side in a direction intersecting both an extending direction of the main circuit portion (71) and a projecting direction of the branched circuit portion (72).

## Patentansprüche

1. Ein Verbinder (10), der Folgendes umfasst:
einen primären Formkörper (20), der durch einstückiges Formen eines primären Leiters (40) mit einem primären Gießharz (30) gebildet ist; und
einen sekundären Formkörper (50), der durch einstückiges Formen eines sekundären Leiters (70) mit einem sekundären Gießharz (60) gebildet ist;
wobei der sekundäre Leiter (70) Folgendes beinhaltet: einen Hauptschaltungsabschnitt (71), der sich entlang des primären Formkörpers (20) erstreckt, und einen verzweigten Schaltungsabschnitt (72), der vom Hauptschaltungsabschnitt (71) abzweigt und seitlich absteht;
wobei das primäre Gießharz (30) einen Stützabschnitt (34) beinhaltet, der seitlich von einer Seitenfläche (61) des sekundären Gießharzes (60) entlang des verzweigten Schaltungsabschnitts (72) vorsteht; und
wobei der Stützabschnitt (34) eine Schaltungskontaktfläche (35) aufweist, die unterhalb eines Basisendteils des verzweigten Schaltungsabschnitts (72) angeordnet und mit einer unteren Fläche des verzweigten Schaltungsabschnitts (72) in Kontakt zu bringen ist,
**gekennzeichnet durch**
ein Paar von Formkontaktflächen (36), die sowohl auf der linken als auch auf der rechten Seite des Basisendteils des verzweigten Schaltungsabschnitts (72) angeordnet sind und bündig mit einer oberen Fläche des verzweigten Schaltungsabschnitts (72) angeordnet sind.

2. Ein Verbinder (10) nach Anspruch 1, wobei der verzweigte Schaltungsabschnitt (72) besteht aus einem breiten Abschnitt (73), der mit dem Hauptschaltungsabschnitt (71) verbunden ist und mit der Schaltungskontaktfläche (35) in Kontakt zu bringen ist, und einer Vielzahl von schmalen Abschnitten (74), die seitlich von dem breiten Abschnitt (73) vorstehen und weiter seitlich als der Stützabschnitt (34) angeordnet sind.

3. Ein Verbinder (10) nach Anspruch 1 oder 2, wobei der primäre Leiter (40) und der sekundäre Leiter (70) Stromschienen bzw. *Busbars* sind, die eine rechteckige Querschnittsform haben und nebeneinander in einer Richtung angeordnet sind, die sowohl eine Ausdehnungsrichtung des Hauptschaltungsabschnitts (71) als auch eine Abstehrichtung des verzweigten Schaltungsabschnitts (72) schneidet.

## Revendications

1. Un connecteur (10), comprenant :
un corps moulé primaire (20) formé en moulant intégralement un conducteur primaire (40) sur une résine de moulage primaire (30) ; et
un corps moulé secondaire (50) formé en moulant intégralement un conducteur secondaire (70) à une résine de moulage secondaire (60) ;
le conducteur secondaire (70) incluant une portion de circuit principale (71) s'étendant le long du corps moulé primaire (20) et une portion de circuit ramifiée (72) se ramifiant à partir de la portion de circuit principale (71) et faisant saillie latéralement ;
la résine de moulage primaire (30) incluant une portion de support (34) faisant saillie latéralement à partir d'une surface latérale (61) de la résine de moulage secondaire (60) le long de la portion de circuit ramifiée (72) ; et
la portion de support (34) ayant une surface de contact de circuit (35) disposée sous une partie d'extrémité de base de la portion de circuit ramifiée (72) et devant être mise en contact avec une surface inférieure de la portion de circuit ramifiée (72),
**caractérisé par**
une paire de surfaces de contact de moule (36) disposées sur les côtés gauche et droit de la partie d'extrémité de base de la portion de circuit ramifiée (72) et disposées au ras d'une surface supérieure de la portion de circuit ramifiée (72).

2. Un connecteur (10) d'après la revendication 1, sachant que la portion de circuit ramifiée (72) est composée d'une portion large (73) connectée à la portion de circuit principale (71) et devant être mise en contact avec la surface de contact de circuit (35), et d'une pluralité de portions étroites (74) faisant saillie latéralement depuis la portion large (73) et disposées plus latéralement que la portion de support (34).

3. Un connecteur (10) d'après la revendication 1 ou 2, sachant que le conducteur primaire (40) et le conducteur secondaire (70) sont des barres collectrices ayant une forme de section transversale rectangulaire et disposées côte à côte dans une direction coupant à la fois une direction d'extension de la portion de circuit principale (71) et une direction de projection de la portion de circuit ramifiée (72).
